(19) Europäisches Patentamt
European Patent Office
Office européen des brevets

(11) **EP 0 713 118 B1**

(12) **EUROPEAN PATENT SPECIFICATION**

(45) Date of publication and mention
of the grant of the patent:
**20.02.2002 Bulletin 2002/08**

(51) Int Cl.⁷: **G02B 26/10**

(21) Application number: **95118015.7**

(22) Date of filing: **15.11.1995**

(54) **Optical scanning device and method of adjusting same**

Optischer Scanner und Verfahren zu seiner Justierung

Dispositif de balayage optique et procédé de son ajustage

(84) Designated Contracting States:
**DE GB**

(30) Priority: **16.11.1994 JP 28189994**

(43) Date of publication of application:
**22.05.1996 Bulletin 1996/21**

(73) Proprietor: **FUJI PHOTO FILM CO., LTD.**
**Kanagawa-ken, 250-01 (JP)**

(72) Inventor: **Sumi, Katsuto,**
**c/o Fuji Photo Film Co., Ltd.**
**Ashigarakami-gun, Kanagawa-ken 258 (JP)**

(74) Representative:
**Grünecker, Kinkeldey, Stockmair &**
**Schwanhäusser Anwaltssozietät**
**Maximilianstrasse 58**
**80538 München (DE)**

(56) References cited:
**EP-A- 0 580 080          WO-A-90/00755**
**GB-A- 2 160 994          US-A- 4 264 119**
**US-A- 4 819 018          US-A- 5 113 280**

**Description**

BACKGROUND OF THE INVENTION

Field of the Invention:

The present invention relates to an optical scanning device for scanning a medium with a light beam to record information or read information from the medium, and a method of adjusting such an optical scanning device.

Description of the Related Art:

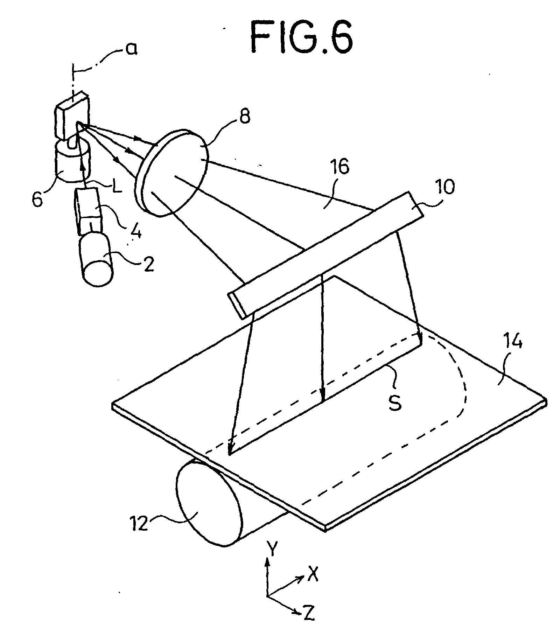

There have widely been used optical scanning devices for scanning a recording medium with a laser beam to record information, such as image information, or read such information from the recording medium. For example, FIG. 6 of the accompanying drawings shows a conventional laser printer having a laser oscillator 2 for emitting a laser beam L, a modulator 4 for modulating the intensity of the laser beam L with information to be recorded, and a light deflector 6 for deflecting the modulated laser beam L in a main scanning direction. The deflected laser beam L travels through a condensing lens 8, and is reflected by a reflecting mirror 10 to a recording medium 14 which is being fed in an auxiliary scanning direction by a drum 12, for recording the information two-dimensionally on the recording medium 14. A similar device is known from US 4,819,018.

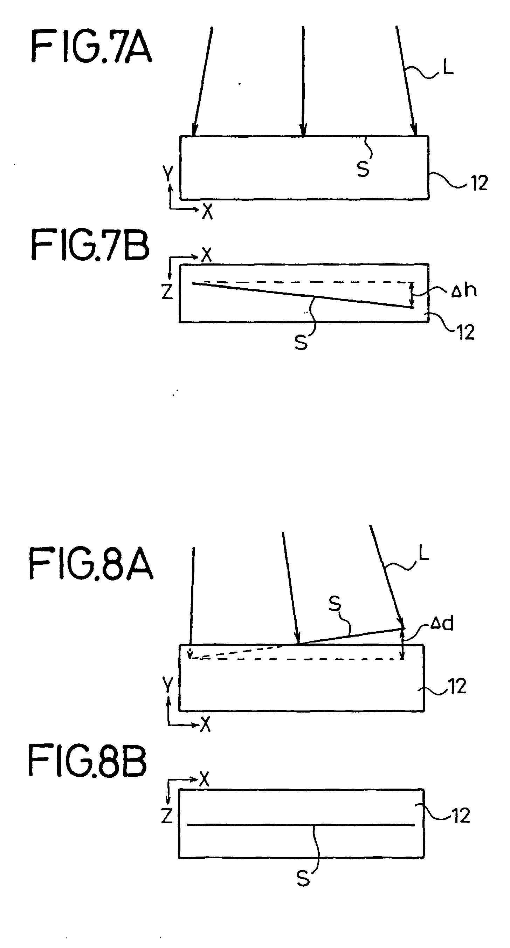

If the axis a of the rotatable shaft of the light deflector 6 is unduly tilted from a desired direction, then, as shown in FIGS. 7A and 7B of the accompanying drawings, a scanning line S on the recording medium 14 is skewed with respect to the main scanning direction indicated by the arrow X, thus distorting an image formed on the recording medium 14. On the other hand, if the optical axis of the condensing lens 8 is unduly off-centered, then, as shown in FIGS. 8A and 8B of the accompanying drawings, the scanning line S on the recording medium 14 is skewed in the direction indicated by the arrow Y which is perpendicular to the main scanning direction indicated by the arrow X and the auxiliary scanning direction indicated by the arrow Z, thereby causing an image formed on the recording medium 14 to be blurred on one or both sides thereof, a phenomenon referred to as a tilt of the image plane.

In the event of occurrence of any of the above drawbacks, it has been difficult or impossible to eliminate them by adjusting the components of the laser printer. Specifically, the problems cannot be solved by adjusting the orientation of the reflecting mirror 10 because the scanning line S will also be moved in both the directions indicated by the arrows Y, Z when the orientation of the reflecting mirror 10 is adjusted. Directly adjusting the light deflector 6 and the condensing lens 8, which are responsible for a skew of the scanning line S, is tedious and time-consuming since they have to be adjusted simultaneously according to a trial-and-error approach.

SUMMARY OF THE INVENTION

It is a general object of the present invention to provide an optical scanning device capable of recording and reading images highly accurately with a light beam, and a method of adjusting such an optical scanning device.

A major object of the present invention is to provide an optical scanning device which is capable of easily and accurately correcting a scanning line formed on a medium by a light beam out of a skewed condition, and also correcting an image plane on the medium out of a tilted condition.

Another object of the present invention is to provide an optical scanning device which is capable of easily and accurately correcting a scanning line formed on a medium by a light beam out of a skewed condition, correcting the position of the scanning line in a scanning direction, and also correcting an image plane on the medium out of a tilted condition.

Still another object of the present invention is to provide an optical scanning device which is capable of easily and accurately correcting a scanning line formed on a medium by a scanning light beam and a synchronizing light beam out of a skewed condition, and also correcting the position of the scanning line.

The above and other objects, features, and advantages of the present invention will become more apparent from the following description when taken in conjunction with the accompanying drawings in which preferred embodiments of the present invention are shown by way of illustrative example.

BRIEF DESCRIPTION OF THE DRAWINGS

FIG. 1 is a schematic perspective view of an optical scanning and recording device which incorporates an optical scanning device according to an embodiment of the present invention and to which a method of adjusting the optical scanning device is applied;

FIG. 2 is a schematic side elevational view of some components of the optical scanning and recording device shown in FIG. 1;

FIG. 3 is an exploded perspective view of a mechanism for angularly moving a movable reflecting mirror of the optical scanning and recording device shown in FIG. 1;

FIG. 4A is a schematic view showing the manner in which the movable reflecting mirror is angularly moved about an axis lying in the plane of the movable reflecting mirror;

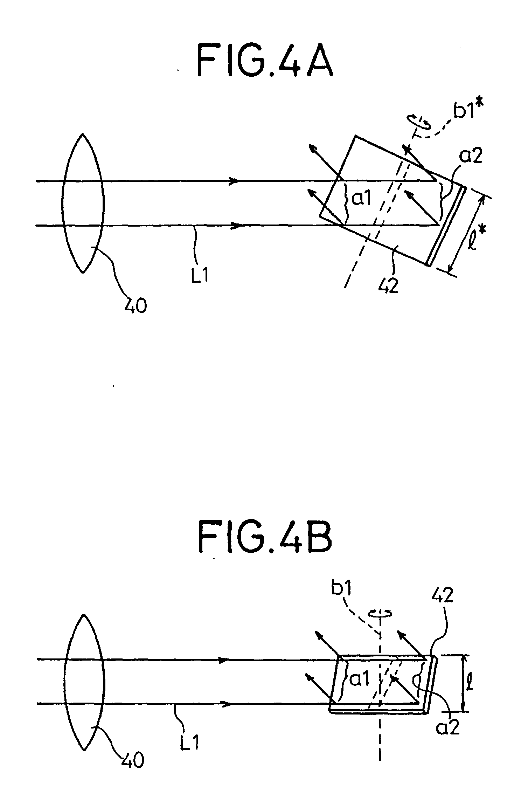

FIG. 4A is a schematic view showing the manner in which the movable reflecting mirror is angularly moved about an axis lying substantially perpendicular to both a direction in which a light beam is applied and a direction in which the light beam is scanned;

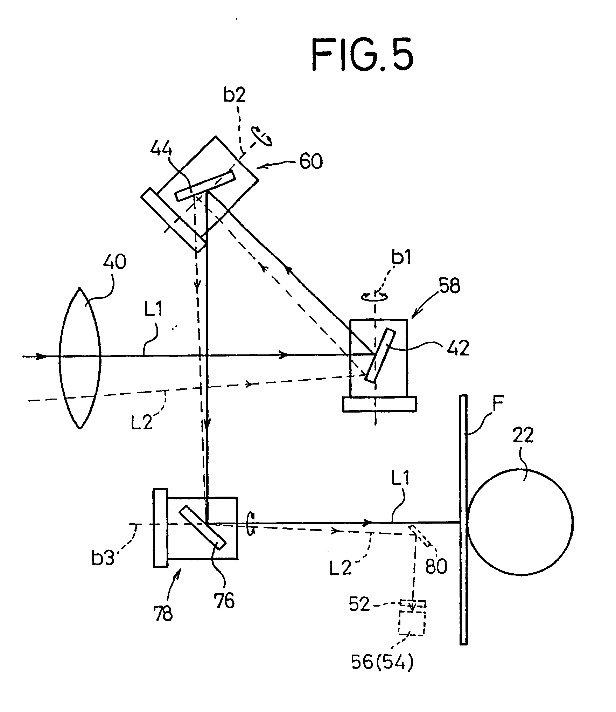

FIG. 5 is a schematic side elevational view of some components of an optical scanning and recording device which incorporates an optical scanning device according to another embodiment of the present invention and to which a method of adjusting the optical scanning device is applied;

FIG. 6 is a schematic side elevational view of a conventional optical scanning and recording device as a laser printer;

FIGS. 7A and 7B are plan views in an X-Y plane and an X-Z plane, respectively, showing the manner in which a scanning line is skewed with respect to an auxiliary scanning direction on a drum of the conventional optical scanning and recording device shown in FIG. 6; and

FIGS. 8A and 8B are plan views in the X-Y plane and the X-Z plane, respectively, showing the manner in which an image plane is tilted on the drum of the conventional optical scanning and recording device shown in FIG. 6.

## DETAILED DESCRIPTION OF THE PREFERRED EMBODIMENTS

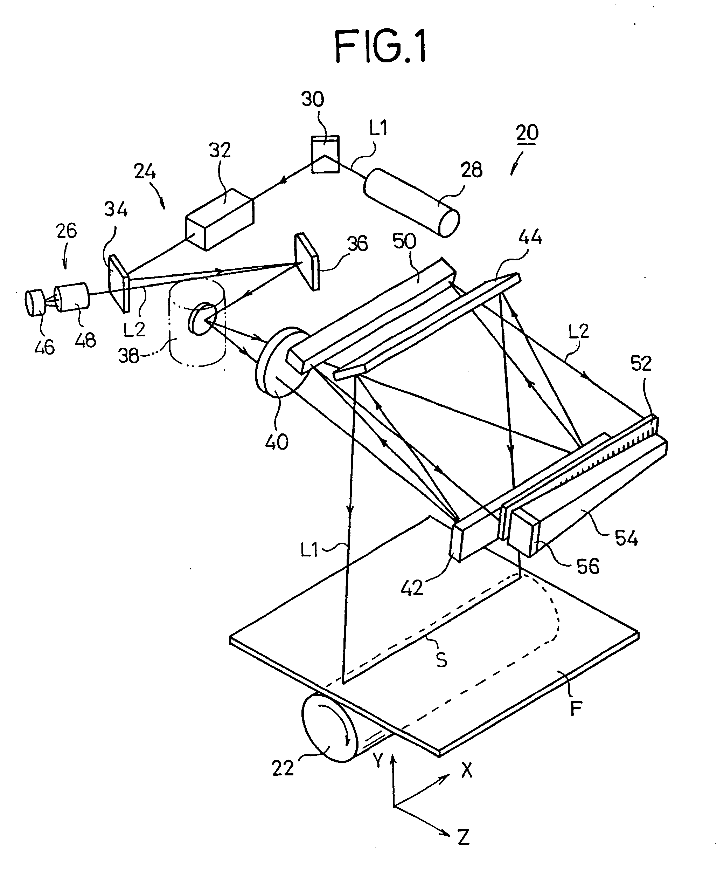

FIG. 1 shows an optical scanning and recording device 20 which incorporates an optical scanning device according to an embodiment of the present invention and to which a method of adjusting the optical scanning device is applied.

The optical scanning and recording device 20 basically comprises a recording optical system 24 for recording an image with a recording laser beam L1 that is applied as a first light beam to a film F which is being fed in an auxiliary scanning direction indicated by the arrow Z by a drum 22, and a synchronizing optical system 26 for generating a synchronizing signal used in recording an image by the recording optical system 24, with a synchronizing laser beam L2 as a second light beam.

The recording optical system 24 has a laser oscillator (light beam generating means) 28 comprising an He-Ne laser or the like for emitting the recording laser beam L1, an acoustooptical modulator (AOM) 32 for modulating, with information to be recorded, the intensity of the recording laser beam L1 that has been reflected by a reflecting mirror 30, a light deflector (light deflecting means) 38 such as a resonant scanner or the like for deflecting the modulated recording laser beam L1 that has been reflected by reflecting mirrors 34, 36, a condensing lens 40 such as an fθ lens or the like for adjusting the scanning speed of the deflected recording laser beam L1 on the film F, a movable reflecting mirror (first movable reflecting mirror) 42 for reflecting the recording laser beam L1 that has passed through the condensing lens 40, and a movable reflecting mirror (second movable reflecting mirror) 44 for reflecting the recording laser beam L1 that has been reflected by the movable reflecting mirror 42, to the film F. The movable reflecting mirrors 42, 44 are elongate in a main scanning direction indicated by the arrow X.

The synchronizing optical system 26 has a laser diode 46 for emitting the synchronizing laser beam L2, a collimator lens 48 for collimating the synchronizing laser beam L2, a grid 52 for receiving the synchronizing laser beam L2 that has been reflected by the reflecting mirror 36, the light deflector 38, the condensing lens 40, the movable reflecting mirror 42, and a reflecting mirror 50, a light guide bar 54 disposed behind the grid 52 for guiding the synchronizing laser beam L2 introduced through slits defined in the grid 52, and a light detector 56 positioned at an end of the light guide bar 54 for detecting the synchronizing laser beam L2 guided by the light guide bar 54. The reflecting mirror 50, the grid 52, and the light guide bar 54 are elongate in the main scanning direction indicated by the arrow X. The grid 52, the light guide bar 54, and the light detector 56 jointly serve as a synchronizing signal generating means.

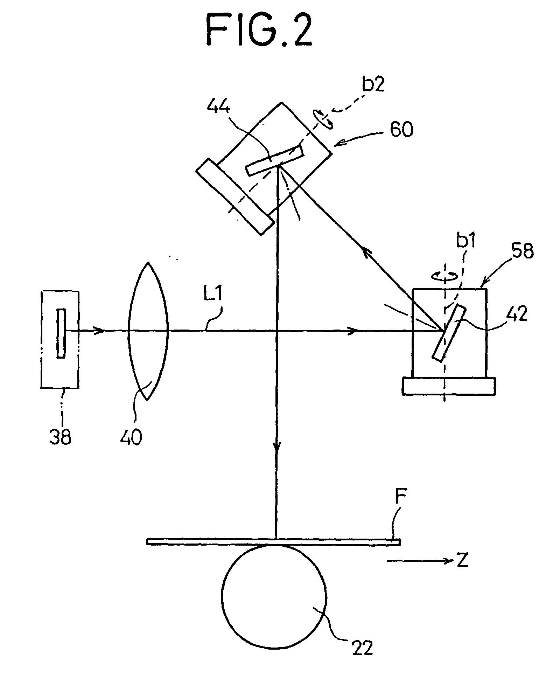

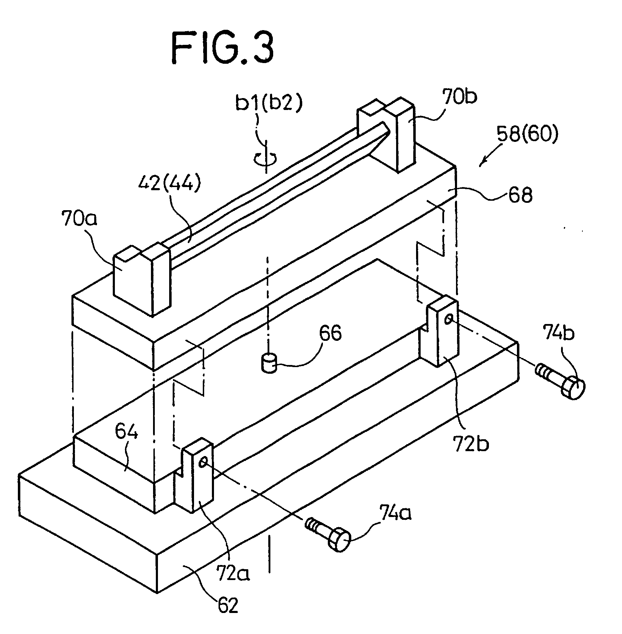

As shown in FIG. 2, the movable reflecting mirrors 42, 44 are angularly movably supported by respective angularly moving mechanisms (first and second adjusting means) 58, 60. The angularly moving mechanisms 58, 60 are capable of angularly moving the movable reflecting mirrors 42, 44 about respective axes b1, b2 which are substantially perpendicular to the direction of the recording laser beam L1 applied thereto and the main scanning direction indicated by the arrow X. As shown in FIG. 3, each of the angularly moving mechanisms 58, 60 comprises a fixed base 64 fixedly mounted on an optical reference plate 62, and a rotatable base 68 rotatably mounted on the fixed base 64 by a pin 66 for rotation about the pin 66. The movable reflecting mirror 42 or 44 is supported on the rotatable base 68 by a pair of mirror brackets 70a, 70b at respective opposite end of the movable reflecting mirror 42 or 44. The rotatable base 68 can be adjusted in angular displacement with respect to the fixed base 64 by adjustment screws 74a, 74b that are threaded through respective brackets 72a, 72b mounted on the fixed base 64 into abutment against respective opposite ends of the rotatable base 68.

Operation of the optical scanning and recording device 20 and a method of adjusting the optical scanning device incorporated therein will be described below.

In the synchronizing optical system 26, the synchronizing laser beam L2 emitted from the laser diode 46 is collimated by the collimator lens 48, reflected by the reflecting mirror 36 to the light deflector 38, and deflected in the main scanning direction indicated by the arrow X by the light deflector 38. The deflected synchronizing laser beam L2 is adjusted for its scanning speed by the condensing lens 40, and then led to the grid 52 by the movable reflecting mirror 42 and the reflecting mirror 50. The grid 52 has an array of parallel slits defined therein which are spaced in the main scanning direction indicated by the arrow X. The synchronizing laser beam L2 that has passed through the slits of the grid 52 is converted into a pulsed light signal, which is guided by the light guide bar 54 to the light detector 56 that converts the pulsed light signal into a pulsed electric signal. The pulsed electric signal is multiplied with respect to its frequency and then shaped in waveform into a desired synchronizing signal.

In the recording optical system 24, the recording laser beam L1 emitted from the laser oscillator 28 is reflected by the reflecting mirror 30 to the AOM 32. After the recording laser beam L1 is intensity-modulated with information to be recorded by the AOM 32, it is reflected by the reflecting mirrors 34, 36 to the light deflector 38, and deflected in the main scanning direction indicated by the arrow X by the light deflector 38. The deflected recording laser beam L1 is adjusted for its scanning speed by the condensing lens 40, and then led to the film F by the movable reflecting mirrors 42, 44, thereby scanning the film F in the main scanning direction indicated by the arrow X. Since the film F is being fed in the auxiliary scanning direction indicated by the arrow Z, the information is two-dimensionally recorded as an image on the film F by the recording laser beam L1.

If the axis of the light deflector 38 is unduly tilted or the optical axis of the condensing lens 40 is undesirably off-centered, then a scanning line S formed on the film F by the recording laser beam L1 is skewed as shown in FIGS. 7A, 7B and 8A, 8B, causing a distortion of the recorded image or a tilt of the image plane on the film F.

A process of correcting the scanning line S out of a skewed condition will be described below.

The movable reflecting mirrors 42, 44 are angularly movable about the respective axes b1, b2 by the respective angular moving mechanisms 58, 60 shown in FIGS. 2 and 3, the axes b1, b2 extending substantially perpendicularly to the direction of the recording laser beam L1 applied thereto and the main scanning direction indicated by the arrow X. When either one of the movable reflecting mirrors 42, 44 is angularly moved, then the scanning line S on the film F is skewed in both the directions indicated by the arrows Y, Z. If it is assumed that the skew or inclination of the scanning line S in the direction indicated by the arrow Z is indicated by a deviation or positional difference $\Delta h$ in the same direction between the opposite ends of the scanning line S as shown in FIG. 7B, and also that the skew or inclination of the scanning line S in the direction indicated by the arrow Y is indicated by a deviation or positional difference $\Delta d$ in the same direction between the opposite ends of the scanning line S as shown in FIG. 8A, then the deviations $\Delta h$, $\Delta d$ which are produced when both the movable reflecting mirrors 42, 44 are angularly moved respectively through angles $\Delta \theta_1$, $\Delta \theta_2$ are determined as follows:

$$\Delta h = a_{11} \cdot \Delta \theta_1 + a_{12} \cdot \Delta \theta_2 \qquad (1)$$

$$\Delta d = a_{21} \cdot \Delta \theta_1 + a_{22} \cdot \Delta \theta_2 \qquad (2)$$

where $a_{11}$, $a_{12}$, $a_{21}$, $a_{22}$ are coefficients. Therefore, if the scanning line S on the film F has been skewed by the deviation $\Delta h$ in the direction indicated by the arrow Z and by the deviation $\Delta d$ in the direction indicated by the arrow X, then the deviations $\Delta h$, $\Delta d$ can be eliminated when the movable reflecting mirrors 42, 44 are angularly moved through the respective angles $\Delta \theta_1$, $\Delta \theta_2$, using a corrective matrix M, as indicated by the following equation (3):

$$\begin{bmatrix} \Delta \theta_1 \\ \Delta \theta_2 \end{bmatrix} = M \begin{bmatrix} \Delta h \\ \Delta d \end{bmatrix} \qquad \cdots (3)$$

where the corrective matrix M is expressed by:

$$M = \begin{bmatrix} a_{11} & a_{12} \\ a_{21} & a_{22} \end{bmatrix}^{-1} \qquad \qquad \cdots (4)$$

and can be obtained by determining the coefficients $a_{11}$, $a_{12}$, $a_{21}$, $a_{22}$ in the equations (1), (2) through simulations or the like.

The movable reflecting mirrors 42, 44 can be angularly moved about the respective axes b1, b2 with the respective adjustment screws 74a, 74b shown in FIG. 3. With the axes b1, b2 extending substantially perpendicularly to the direction of the recording laser beam L1 applied thereto and the main scanning direction indicated by the arrow X, the effective reflecting areas of the movable reflecting mirrors 42, 44 are minimized for reducing the overall size of the optical scanning and recording device.

Specifically, as shown in FIG. 4A, if the movable reflecting mirror 42 were angularly movable about an axis b1* lying in the plane thereof, then when the movable reflecting mirror 42 is in a position indicated by the dotted lines, ranges a1, a2 on the opposite ends of the movable reflecting mirror 42 to which the recording laser beam L1 is applied would be positioned equivalently with respect to the transverse direction of the movable reflecting mirror 42, but when the movable reflecting mirror 42 is in a position indicated by the solid lines, one of the ranges a1, a2 would be in a higher side and the other in a lower side on the movable reflecting mirror 42. Therefore, the movable reflecting mirror 42 would be required to have a sufficiently large width 1* to accommodate both the ranges a1, a2 thereon. However, since the movable reflecting mirror 42 is angularly movable about the axis b1 substantially perpendicular to the direction of the recording laser beam L1 applied thereto and the main scanning direction indicated by the arrow X, as shown in FIG. 4B, the ranges a1, a2 on the movable reflecting mirror 42 remain positionally unchanged when the recording laser beam 11 is deflected by the light deflector 38 irrespective of whether the movable reflecting mirror 42 is in the position indicated by the dotted lines or in the position indicated by the solid lines. As a result, the width l of the movable reflecting mirror 42 shown in FIG. 4B is smaller than the width 1* shown in FIG. 4A insofar as the movable reflecting mirror 42 is angularly movable about the axis b1, rather than the axis b1*.

The axes b1, b2 may not necessarily be perpendicular to the direction of the recording laser beam L1 applied to the movable reflecting mirrors 42, 44, but may rather be oriented in any directions except the directions normal to the movable reflecting mirrors 42, 44, for correcting undesirable image distortions and image plan tilts. If the axes b1, b2 extend obliquely to the directions normal to the movable reflecting mirrors 42, 44, then it is possible to correct the scanning line S in smaller degrees in response to relatively large angular displacement of the movable reflecting mirrors 42, 44, allowing fine adjustment of the scanning line S. On the other hand, if the axes b1, b2 extend perpendicularly to the directions normal to the movable reflecting mirrors 42, 44, then it is possible to correct the scanning line S in larger degrees.

In the above embodiment, the two movable reflecting mirrors 42, 44 are angularly moved to correct the scanning line S out of a skewed condition. FIG. 5 shows an optical scanning and recording device which incorporates an optical scanning device according to another embodiment of the present invention and to which a method of adjusting the optical scanning device is applied. The optical scanning and recording device shown in FIG. 5 differs from the optical scanning and recording device shown in FIG. 1 except that the recording laser beam L1 reflected by the movable reflecting mirror (first movable reflecting mirror) 42 and the movable reflecting mirror (second movable reflecting mirror) 44 is further reflected by another movable reflecting mirror (third movable reflecting mirror) 76 to the film M. The movable reflecting mirror 76 is angular movable by an angularly moving mechanism 78 about an axis b3 extending substantially perpendicularly to the direction of the recording laser beam L1 applied thereto and the main scanning direction. Other details of the optical scanning and recording device shown in FIG. 5 are the same as those of the optical scanning and recording device shown in FIG. 1. Since the movable reflecting mirrors 42, 44, 76 are angularly movable about the respective axes b1, b2, b3 substantially perpendicular to the direction of the recording laser beam L1 applied thereto and the main scanning direction, it is possible to correct the scanning line S out of a skewed condition in the directions indicated by the arrows Z, Y shown in FIG. 1 and also to correct the position of the scanning line S in the direction indicated by the arrow X shown in FIG. 1.

If it is assumed that a deviation of the position of the scanning line S in the direction indicated by the arrow X is $\Delta x$ and the movable reflecting mirror 76 is angularly moved through an angle $\Delta\theta_3$, then the deviations $\Delta h$, $\Delta d$, $\Delta x$ which are produced when both the movable reflecting mirrors 42, 44, 76 are angularly moved respectively through angles $\Delta\theta_1$, $\Delta\theta_2$, $\Delta\theta_3$ are determined as follows:

$$\Delta h = a_{11} \cdot \Delta\theta_1 + a_{12} \cdot \Delta\theta_2 + a_{13} \cdot \Delta\theta_3 \qquad (5)$$

$$\Delta d = a_{21} \cdot \Delta\theta_1 + a_{22} \cdot \Delta\theta_2 + a_{23} \cdot \Delta\theta_3 \qquad (6)$$

$$\Delta x = a_{31} \cdot \Delta\theta_1 + a_{32} \cdot \Delta\theta_2 + a_{33} \cdot \Delta\theta_3 \qquad (7)$$

where $a_{11}$, $a_{12}$, $a_{13}$, $a_{21}$, $a_{22}$, $a_{23}$, $a_{31}$, $a_{32}$, $a_{33}$ are coefficients. Therefore, if the scanning line S can be corrected out of a skewed condition and the position of the scanning line S can be corrected in the main scanning direction indicated by the arrow X when the movable reflecting mirrors 42, 44, 76 are angularly moved through the respective angles $\Delta\theta_1$, $\Delta\theta_2$, $\Delta\theta_3$ as indicated by the following equation (8):

$$\begin{bmatrix} \Delta\theta_1 \\ \Delta\theta_2 \\ \Delta\theta_3 \end{bmatrix} = N \begin{bmatrix} \Delta h \\ \Delta d \\ \Delta x \end{bmatrix} \qquad \cdots (8)$$

where N is a corrective matrix represented by the following equation (9):

$$N = \begin{bmatrix} a_{11} & a_{12} & a_{13} \\ a_{21} & a_{22} & a_{23} \\ a_{31} & a_{32} & a_{33} \end{bmatrix}^{-1} \qquad \cdots (9)$$

In FIG. 5, a mirror 80 may be disposed between the movable reflecting mirror 76 and the film F for directing the synchronizing laser beam L2 reflected by the movable reflecting mirrors 42, 44, 76 toward the grid 52. With this modified arrangement, a scanning line formed on the grid 52 by the synchronizing laser beam L2 can be corrected out of a skewed condition and the position of the scanning line on the grid 52 in the scanning direction can also be corrected, making it possible to generate a highly accurate synchronizing signal for recording images on the film F with greater accuracy.

According to one of the embodiments of the present invention, as described above, the two movable reflecting mirrors inserted in the optical path of the light beam are independently angularly movable in desired directions for easily and accurately correcting a scanning line formed on the recording medium out of a skewed condition and also correcting an image plane on the recording medium out of a tilted condition, thereby to record images on the recording medium or read images from the recording medium highly accurately.

According to the other embodiment of the present invention, as described above, the three movable reflecting mirrors inserted in the optical path of the light beam are independently angularly movable in desired directions for easily and accurately correcting a scanning line formed on the recording medium out of a skewed condition, correcting the position of the scanning line in the scanning direction, and also correcting an image plane on the recording medium out of a tilted condition, thereby to record images on the recording medium or read images from the recording medium more highly accurately.

Although certain preferred embodiments of the present invention have been shown and described in detail, it should be understood that various changes and modifications may be made therein without departing from the scope of the appended claims.

## Claims

1. An optical scanning device for recording information on or reading information from a medium (F) supported in a plane, comprising:

  light beam generating means (28) for emitting a light beam (L1);

light deflecting means (38) for deflecting the light beam (L1) in a scanning direction on the medium (F), thereby forming a scanning line (S) on the medium (F);

a condensing lens (40) for concentrating the light beam (L1) deflected by said light deflecting means (38);

a first movable reflecting mirror (42) and a second movable reflecting mirror (44), said first and second reflecting mirrors (42, 44) being disposed between said condensing lens (40) and the plane of the medium (F), and arranged for successively reflecting the light beam (L1);

first adjusting means (58) for angularly moving said first reflecting mirror (42) around a first predetermined axis (b1) and second adjusting means (60) for angularly moving said second reflecting mirror (44) around a second predetermined axis (b2); whereby

for compensation of skew of the scanning line (S) with respect to the scanning direction and of tilt of an image plane with respect to the plane of the medium (F), the adjusting means (58, 60) are adapted to angularly move respective reflecting mirrors (42, 44) through predetermined angles in predetermined directions to adjust the directions in which said light beam (L1) is reflected.

2. An optical scanning device according to claim 1, further comprising:

a third movable reflecting mirror (76), said first, second and third reflecting mirrors (42, 44, 76) being disposed between said condensing lens (40) and the medium, and arranged for successively reflecting the light beam (L1),

and third adjusting means (78) for angularly moving said third reflecting mirror (42) around a third predetermined axis (b3); whereby

for correction of the position of the scanning line on the medium in the scanning direction and for compensation of skew of the scanning line (S) with respect to the scanning direction and of tilt of an image plane with respect to the plane of the medium (F), the adjusting means (58, 60, 78) are arranged to angularly move respective reflecting mirrors (42, 44, 76) through predetermined angles in predetermined directions to adjust the directions in which said light beam (L1) is reflected.

3. An optical scanning device according to claim 1 or 2, wherein said adjusting means (58, 60, 78) comprise respective angularly moving mechanisms (58, 60, 78) for angularly moving the corresponding movable reflecting mirrors (42, 44, 76), respectively, about axes (b1, b2, b3) which extend perpendicularly to both the direction of the light beam (L1) incident on respective reflecting mirror (42, 44, 76) and the scanning direction.

4. An optical scanning device according to claim 1, further comprising a synchronizing optical system (26) which comprises:

second light beam generating means (46) for emitting a second light beam (L2); and

synchronizing signal generating means (52, 54, 56) for receiving said second light beam (L2) through said light deflecting means (38) and said condensing lens (40) to generate a synchronizing signal.

5. An optical scanning device according to claim 2, further comprising a synchronizing optical system (26) which comprises:

second light beam generating means (46) for emitting a second light beam (L2); and

synchronizing signal generating means (52, 54, 56) for receiving said second light beam (L2) through said light deflecting means (38), said condensing lens (40), said first movable reflecting mirror (42), said second movable reflecting mirror (44), and said third movable reflecting mirror (76) to generate a synchronizing signal.

6. An optical scanning device according to claim 4 or 5, wherein said synchronizing signal generating means (52, 54, 56) comprises a grid (52) having an array of slits defined therein which are spaced in the scanning direction in which said second light beam (L2) is deflected by said light deflecting means (38), said synchronizing signal generating means (52, 54, 56) generating said synchronizing signal based on said second light beam (L2) which has passed through said grid (52).

7.  A method of adjusting an optical scanning device wherein a light beam (L1) is deflected, condensed and scanned over a plane in a scanning direction to record information on or read information from a medium (F) provided in said plane, comprising the steps of:

    reflecting said deflected and condensed light beam (L1) successively through a first movable reflecting mirror (42) and a second movable reflecting mirror (44);

    angularly moving said first movable reflecting mirror (42) and said second movable reflecting mirror (44) through respective angles $\Delta\theta_1$, $\Delta\theta_2$ around predetermined axes (b1, b2) to eliminate deviations $\Delta h$, $\Delta d$, from a predetermined direction, of a scanning line (S) on the medium (F) in two directions substantially perpendicular to said scanning direction and to each other, according to the equation:

$$\begin{bmatrix} \Delta\theta_1 \\ \Delta\theta_2 \end{bmatrix} = M \begin{bmatrix} \Delta h \\ \Delta d \end{bmatrix}$$

    where M represents a corrective matrix of coefficients,
    to compensate a skew of the scanning line (S) with respect to the scanning direction and to compensate a tilt of the image plane with respect to the plane of the medium (F).

8.  A method of adjusting an optical scanning device wherein a light beam (L1) is deflected, condensed and scanned over a plane in a scanning direction to record information on or read information from a medium (F) provided in said plane, comprising the steps of:

    reflecting said deflected and condensed light beam (L1) successively through first, second and third movable reflecting mirrors (42, 44, 76);

    angularly moving said first movable reflecting mirror (42), said second movable reflecting mirror (44), and said third movable reflecting mirror (76) through respective angles $\Delta\theta_1$, $\Delta\theta_2$, $\Delta\theta_3$ around predetermined axes to eliminate deviations $\Delta h$, $\Delta d$, $\Delta x$ from a predetermined direction and a predetermined position, of a scanning line on said medium (F) in two directions substantially perpendicular to said scanning direction and to each other and in said scanning direction, according to the equation:

$$\begin{bmatrix} \Delta\theta_1 \\ \Delta\theta_2 \\ \Delta\theta_3 \end{bmatrix} = N \begin{bmatrix} \Delta h \\ \Delta d \\ \Delta x \end{bmatrix}$$

    where N represents a corrective matrix of coefficients,
    to correct the position of said scanning line (S) in said scanning direction, to compensate a skew of the scanning line (S) with respect to the scanning direction, and to compensate a tilt of the image plane with respect to the plane of the medium (F).

**Patentansprüche**

1.  Eine optische Abtastvorrichtung, um auf einem in einer Ebene gehalterten Medium (F) Information aufzuzeichnen oder von diesem Medium Information auszulesen, umfassend:

eine Lichtstrahlerzeugungseinrichtung (28), um einen Lichtstrahl (L1) auszusenden;

eine Lichtablenkeinrichtung (38), um den Lichtstrahl (L1) in einer Abtastrichtung auf dem Medium (F) abzulenken, wobei eine Abtastlinie (S) auf dem Medium (F) gebildet wird;

eine Kondensorlinse (40), um den durch diese Ablenkeinrichtung (38) abgelenkten Lichtstrahl (L1) zu bündeln;

ein erster bewegbarer reflektierender Spiegel (42) und ein zweiter bewegbarer Spiegel (44), welche zwischen dieser Kondensorlinse (40) und der Ebene des Mediums (F) vorgesehen sind, und so angeordnet sind, dass sie den Lichtstrahl (L1) nacheinander reflektieren;

eine erste Anpassungseinrichtung (58), um den ersten reflektierenden Spiegel (42) um eine erste vorbestimmte Achse (b1) zu drehen und eine zweite Anpassungseinrichtung (60), um den zweiten reflektierenden Spiegel um eine zweite vorbestimmte Achse (b2) zu drehen; wobei

die Anpassungseinrichtungen (58, 60) so eingerichtet sind, dass sie die jeweiligen reflektierenden Spiegel (42, 44) um vorbestimmte Winkel in vorbestimmte Richtungen drehen, um die Richtungen, in welche der Lichtstrahl (L1) reflektiert wird, so anzupassen, dass ein Schieflaufen der Abtastlinie (S) bezüglich der Abtastrichtung und ein Verkippen der Bildebene bezüglich der Ebene des Mediums (F) kompensiert wird.

2. Eine optische Abtastvorrichtung gemäß Anspruch 1, ferner umfassend:

einen dritten bewegbaren reflektierenden Spiegel (76), wobei der erste, zweite und dritte reflektierende Spiegel (42, 44, 46) zwischen der Kondensorlinse (40) und dem Medium vorgesehen und so angeordnet sind, dass sie den Lichtstrahl (L1) nacheinander reflektieren, und

eine dritte Anpassungseinrichtung (78), um den dritten reflektierenden Spiegel (76) um eine dritte vorbestimmte Achse (b3) zu drehen; wobei

die Anpassungseinrichtungen (58, 60, 78) so eingerichtet sind, dass sie die jeweiligen reflektierenden Spiegel (42, 44, 46) um vorbestimmte Winkel in vorbestimmte Richtungen drehen, um die Richtungen, in welcher der Lichtstrahl (L1) reflektiert wird, so anzupassen, dass die Position der Abtastlinie auf dem Medium in Abtastrichtung korrigiert wird, und ein Schieflaufen der Abtastlinie bezüglich der Abtastrichtung und eine Verkippung der Bildebene bezüglich der Ebene des Mediums zu kompensiert werden.

3. Eine optische Abtastvorrichtung gemäß Anspruch 1 oder 2, wobei die Anpassungseinrichtungen (58, 60, 78) jeweils Drehmechanismen (58, 60, 78) umfassen, um die entsprechenden bewegbaren reflektierenden Spiegel (42, 44, 46) um Achsen (b1, b2, b3) zu drehen, die sowohl senkrecht zur Richtung des Lichtstrahls, welcher auf den entsprechenden reflektierenden Spiegel (42, 46, 76) auftrifft, als auch senkrecht zur Abtastrichtung sind.

4. Eine optische Abtastrichtung gemäß Anspruch 1, ferner umfassend ein optisches Synchronisationssystem (26), welches umfasst:

eine zweite Lichtstrahlerzeugungseinrichtung (46), um einen zweiten Lichtstrahl (L2) auszusenden; und eine Signalerzeugungseinrichtung (52, 54, 56) zur Erzeugung eines Synchronisationssignals, welches den zweiten Lichtstrahl (L2) über die Lichtablenkeinrichtung (38) und die Kondensorlinse (40) empfängt, um ein Synchronisationssignal zu erzeugen.

5. Eine optische Abtastvorrichtung gemäß Anspruch 2, ferner umfassend ein optisches Synchronisationssystem (26), welches umfasst:

eine zweite Lichtstrahlerzeugungseinrichtung (46), um einen zweiten Lichtstrahl (L2) zu erzeugen; und

eine Signalerzeugungseinrichtung (52, 54, 56), um den zweiten Lichtstrahl über die Ablenkeinrichtung (38), die Kondensorlinse (40), den ersten bewegbaren reflektierenden Spiegel (42), den zweiten bewegbaren reflektierenden Spiegel (44), und den dritten bewegbaren reflektierenden Spiegel (76) zu empfangen, um ein Synchronisationssignal zu erzeugen.

**6.** Eine optische Abtastvorrichtung gemäß Anspruch 4 oder 5, in welcher die Signalerzeugungseinrichtung (52, 54, 56) zur Erzeugung eines Synchronisationssignals ein Gitter (52) umfasst, welches eine Anordnung von Schlitzen aufweist, die entlang der Abtastrichtung beabstandet sind, und wobei der zweite Lichtstrahl (L2) durch die Lichtablenkeinrichtung (38) abgelenkt wird, wobei die Vorrichtung zur Erzeugung des Synchronisationssignals (52, 54, 56) das Synchronisationssignal auf Grundlage des durch das Gitter (52) hindurchtretenden zweiten Lichtstrahls erzeugt.

**7.** Ein Verfahren zur Korrektur einer optischen Abtastvorrichtung, bei der ein Lichtstrahl (L1) abgelenkt, bündelt, und entlang einer Abtastrichtung über eine Ebene geführt wird, um Informationen auf einem Medium in dieser Ebene aufzuzeichnen oder von diesem Medium zu lesen, umfassend die Schritte:

nacheinander Reflektieren des abgelenkten und kondensierten Lichtstrahls (L1) durch einen ersten bewegbaren Spiegel (42) und einen zweiten bewegbaren reflektierenden Spiegel (44);

Drehbewegen des ersten reflektierenden Spiegels (42) und zweiten reflektierenden Spiegels (44) um vorbestimmte Achsen (b1, b2) um jeweilige Winkel $\Delta\theta_1$, $\Delta\theta_2$, um Abweichungen $\Delta h$, $\Delta d$ einer Abtastlinie (S) von einer vorbestimmten Richtung auf dem Medium (F) in zwei Richtungen, die im Wesentlichen senkrecht zu der Abtastrichtung und senkrecht zueinander sind, gemäß der Gleichung:

$$\begin{bmatrix} \Delta\theta_1 \\ \Delta\theta_2 \end{bmatrix} = M \begin{bmatrix} \Delta h \\ \Delta d \end{bmatrix}$$

zu eliminieren, wobei M eine Korrekturmatrix von Koeffizienten darstellt,

um einen Schieflauf der Abtastlinie bezüglich der Abtastrichtung und eine Verkippung der Bildebene bezüglich der Ebene des Mediums (F) zu kompensieren.

**8.** Ein Verfahren zur Korrektur einer optischen Abtastvorrichtung, bei der ein Lichtstrahl (L1) abgelenkt, bündelt, und entlang einer Abtastrichtung über eine Ebene geführt wird, um Informationen auf einem Medium in dieser Ebene aufzuzeichnen oder von diesem Medium zu lesen, umfassend die Schritte:

nacheinander Reflektieren des abgelenkten und kondensierten Lichtstrahls (L1) durch erste, zweite und dritte bewegbare reflektierende Spiegel (42, 44, 76);

Drehbewegen des ersten bewegbaren Spiegels (42), des zweiten bewegbaren Spiegels (44), und des dritten bewegbaren reflektierenden Spiegels (76) um vorbestimmte Achsen um entsprechende Winkel $\Delta\theta_1$, $\Delta\theta_2$, $\Delta\theta_3$, um Abweichungen $\Delta h$, $\Delta d$, $\Delta x$ einer Abtastlinie auf dem Medium (F) von einer vorbestimmten Richtung und einer vorbestimmten Position in zwei Richtungen, die im Wesentlichen senkrecht zueinander und zur Abtastrichtung sind, gemäß der Gleichung:

$$\begin{bmatrix} \Delta\theta_1 \\ \Delta\theta_2 \\ \Delta\theta_3 \end{bmatrix} = N \begin{bmatrix} \Delta h \\ \Delta d \\ \Delta x \end{bmatrix}$$

zu eliminieren, wobei N eine Korrekturmatrix von Koeffizienten darstellt,

um die Position der Abtastlinie (S) in Abtastrichtung zu korrigieren, und um einen Schieflauf der Abtastlinie (S) bezüglich der Abtastrichtung und eine Verkippung der Bildebene bezüglich der Ebene des Mediums zu kompensieren.

**Revendications**

1. Dispositif d'analyse optique en vue d'enregistrer une information sur ou de lire une information d'un support (F) supporté dans un plan, comprenant :

   des moyens de génération de faisceau lumineux (28) en vue d'émettre un faisceau lumineux (L1) ;
   des moyens de déviation de lumière (38) afin de dévier le faisceau lumineux (L1) dans une direction d'analyse sur le support (F), formant ainsi une ligne d'analyse (S) sur le support (F) ;
   une lentille de condensation (40) afin de concentrer le faisceau lumineux (L1) dévié par lesdits moyens de déviation de lumière (38) ;
   un premier miroir réfléchissant mobile (42) et un second miroir réfléchissant mobile (44), lesdits premier et second miroirs réfléchissants (42, 44) étant disposés entre ladite lentille de condensation (40) et le plan du support (F), et disposés pour réfléchir successivement le faisceau lumineux (L1) ;
   des premiers moyens de réglage (58) pour déplacer angulairement ledit premier miroir réfléchissant (42) autour d'un premier axe prédéterminé (b1) et des seconds moyens de réglage (60) pour déplacer angulairement ledit second miroir réfléchissant (44) autour d'un second axe prédéterminé (b2); dans lequel
   en vue d'une compensation de l'inclinaison de la ligne d'analyse (S) par rapport à la direction d'analyse et de l'inclinaison d'un plan d'image par rapport au plan du support (F), les moyens de réglage (58, 60) sont agencés pour déplacer angulairement les miroirs réfléchissants respectifs (42, 44) selon des angles prédéterminés dans des directions prédéterminées pour régler les directions dans lesquelles est réfléchi ledit faisceau lumineux (L1).

2. Dispositif d'analyse optique selon la revendication 1, comprenant en outre :

   un troisième miroir réfléchissant mobile (76), lesdits premier, second et troisième miroirs réfléchissants (42, 44, 76) étant disposés entre ladite lentille de condensation (40) et le support, et agencés pour réfléchir successivement le faisceau lumineux (L1),
   et des troisièmes moyens de réglage (78) afin de déplacer angulairement ledit troisième miroir réfléchissant (42) autour d'un troisième axe prédéterminé (b3) ; dans lequel
   en vue d'une correction de la position de la ligne d'analyse sur le support dans la direction d'analyse et en vue d'une compensation de l'inclinaison de la ligne d'analyse (S) par rapport à la direction d'analyse et de l'inclinaison d'un plan d'image par rapport au plan du support (F), les moyens de réglage (58, 60, 78) sont agencés pour déplacer angulairement les miroirs réfléchissants respectifs (42, 44, 76) selon des angles prédéterminés dans des directions prédéterminées pour régler les directions dans lesquelles ledit faisceau lumineux (L1) est réfléchi.

3. Dispositif d'analyse optique selon la revendication 1 ou 2, dans lequel lesdits moyens de réglage (58, 60, 78) comportent des mécanismes de déplacement angulaires respectifs (58, 60, 78) afin de déplacer angulairement les miroirs réfléchissants mobiles correspondants (42, 44, 76), respectivement, autour d'axes (b1, b2, b3) qui s'étendent perpendiculairement à la fois à la direction du faisceau lumineux (L1) frappant le miroir réfléchissant respectif (42, 44, 76) et à la direction d'analyse.

4. Dispositif d'analyse optique selon la revendication 1, comprenant en outre un système optique de synchronisation (26) qui comprend :

   des seconds moyens de génération de faisceau lumineux (46) pour émettre un second faisceau lumineux (L2); et
   des moyens de génération de signal de synchronisation (52, 54, 56) pour recevoir ledit second faisceau lumineux (L2) par l'intermédiaire desdits moyens de déviation de lumière (38) et de ladite lentille de condensation (40) afin de générer un signal de synchronisation.

5. Dispositif d'analyse optique selon la revendication 2, comprenant en outre un système optique de synchronisation (26) qui comprend :

   des seconds moyens de génération de faisceau lumineux (46) afin d'émettre un second faisceau lumineux (L2) ; et
   des moyens de génération de signal de synchronisation (52, 54, 56) afin de recevoir ledit second faisceau lumineux (L2) par l'intermédiaire desdits moyens de déviation de lumière (32), de ladite lentille de condensation (40), dudit premier miroir réfléchissant mobile (42), dudit second miroir réfléchissant mobile (44), et dudit troisième miroir réfléchissant mobile (76) pour générer un signal de synchronisation.

6. Dispositif d'analyse optique selon la revendication 4 ou 5, dans lequel lesdits moyens de génération de signal de synchronisation (52, 54, 56) comportent une grille (52) possédant un réseau de fentes pratiquées dans celles-ci qui sont espacées dans la direction d'analyse dans laquelle ledit second faisceau lumineux (L2) est dévié par lesdits moyens de déviation de lumière (38), lesdits moyens de génération de signal de synchronisation (52, 54, 56) générant ledit signal de synchronisation en fonction dudit second faisceau lumineux (L2) ayant traversé ladite grille (52).

7. Procédé de réglage d'un dispositif d'analyse optique dans Lequel un faisceau lumineux (L1) est dévié, condensé et déplacé au-dessus d'un plan dans une direction d'analyse pour enregistrer une information sur ou lire une information à partir d'un support (F) disposé dans ledit plan, comprenant les étapes consistant à :

réfléchir ledit faisceau de lumière dévié et condensé (L1) successivement par l'intermédiaire d'un premier miroir réfléchissant mobile (42) et d'un second miroir réfléchissant mobile (44) ;
déplacer angulairement ledit premier miroir réfléchissant mobile (42) et ledit second miroir réfléchissant mobile (44) selon des angles respectifs $\Delta\theta_1$, $\Delta\theta_2$ autour d'axes prédéterminés (b1, b2) afin d'éliminer des écarts $\Delta h$, $\Delta d$, d'une direction prédéterminée, d'une ligne d'analyse (S) sur le support (F) dans deux directions sensiblement perpendiculaires à ladite direction d'analyse et entre elles, selon l'équation :

$$\begin{bmatrix} \Delta\theta_1 \\ \Delta\theta_2 \end{bmatrix} = M \begin{bmatrix} \Delta h \\ \Delta d \end{bmatrix}$$

où M représente une matrice de correction de coefficients,
pour compenser une inclinaison de la ligne d'analyse (S) par rapport à la direction d'analyse et pour compenser une inclinaison du plan d'image par rapport au plan du support (F).

8. Procédé de réglage d'un dispositif d'analyse optique dans lequel un faisceau lumineux (L1) est dévié, condensé et déplacé au-dessus d'un plan dans une direction d'analyse pour enregistrer une information sur ou lire une information d'un support (F) disposé dans ledit plan, comprenant les étapes consistant à :

réfléchir ledit faisceau lumineux dévié et condensé (11) successivement par l'intermédiaire des premier, second et troisième miroirs réfléchissants mobiles (42, 44, 76) ;
déplacer angulairement ledit premier miroir réfléchissant mobile (42), ledit second miroir réfléchissant mobile (44), et ledit troisième miroir réfléchissant mobile (76) selon des angles respectifs $\Delta\theta_1$, $\Delta\theta_2$, $\Delta\theta_3$ autour d'axes prédéterminés pour éliminer des écarts $\Delta h$, $\Delta d$, $\Delta x$ par rapport à une direction prédéterminée et une position prédéterminée, d'une ligne d'analyse sur ledit support (F) dans deux directions sensiblement perpendiculaires à ladite direction d'analyse et entre elles et dans la direction d'analyse, selon l'équation :

$$\begin{bmatrix} \Delta\theta_1 \\ \Delta\theta_2 \\ \Delta\theta_3 \end{bmatrix} = N \begin{bmatrix} \Delta h \\ \Delta d \\ \Delta x \end{bmatrix}$$

où N représente une matrice de correction de coefficients,
pour corriger la position de ladite ligne d'analyse (S) dans ladite direction d'analyse, pour compenser une inclinaison de la ligne d'analyse (S) par rapport à la direction d'analyse et pour compenser une inclinaison du plan d'image par rapport au plan du support (F).

# FIG.1

# FIG.2

# FIG.3

# FIG.4A

# FIG.4B

# FIG.5

# FIG.6

## FIG.7A

## FIG.7B

## FIG.8A

## FIG.8B